# EUROPÄISCHE PATENTANMELDUNG

(11) **EP 2 087 930 A1**
(43) Veröffentlichungstag der Anmeldung: **12.08.2009**
(21) Anmeldenummer: 08101296.5
(22) Anmeldetag: 05.02.2008
(51) Int. Cl.: B01D 3/34

(54) **Verfahren zur Absorption eines flüchtigen Stoffes in einem flüssigen Absorptionsmittel**

(71) Anmelder: Evonik Degussa GmbH, 45128 Essen (DE)
(72) Erfinder: Seiler, Matthias, Dr., 64347 Griesheim (DE); Glöckler, Bernd, 63457 Hanau (DE); Schwab, Peter Dr., Essen 45133 (DE); Kempka, Stefan, Essen 45357 (DE)

(57) **Zusammenfassung**

Zur Absorption eines flüchtigen Stoffes aus einer Gasphase in einem flüssigen Absorptionsmittel wird die Gasphase mit einem Film eines Absorptionsmittels in Kontakt gebracht das eine ionische Flüssigkeit und ein benetzungsförderndes Additiv umfasst.
Das benetzungsfördernde Additiv umfasst ein oder mehrere Tenside aus der Gruppe der nichtionischen Tenside, zwitterionischen Tenside und kationischen Tenside oder ein PolyetherPolysiloxan-Copolymer, das mehr als 10 Gew.-% [Si(CH3)20]-Einheiten und mehr als 10 Gew.-% [CH2CF{R-O]-Einheiten enthält, in denen R Wasserstoff oder Methyl ist.
Das Verfahren lässt sich in Absorptionskältemaschinen einsetzen.

## Beschreibung

Die Erfindung betrifft ein Verfahren zur Absorption eines flüchtigen Stoffes aus einer Gasphase in einem flüssigen Absorptionsmittel, das eine ionische Flüssigkeit und ein benetzungsförderndes Additiv umfasst, wobei die Gasphase mit einem Film des Absorptionsmittels in Kontakt gebracht wird.

In zahlreichen technischen Verfahren werden flüchtige Stoffe aus einer Gasphase in einem flüssigen Absorptionsmittel absorbiert. Eine solche Absorption wird in vielen Trennverfahren durchgeführt, wie beispielsweise in Extraktivdestillationen, bei denen die Extraktion in einer Rektifikationskolonne erfolgt, oder in Gasreinigungsverfahren, wie beispielsweise der Abtrennung von Kohlendioxid aus Verbrennungsabgasen, bei denen die Absorption in einer Gaswäsche erfolgt. Darüber hinaus wird eine solche Absorption auch in Absorptionskältemaschinen genutzt.

In solchen Absorptionsverfahren ist es von Vorteil, wenn das Absorptionsmittel einen nur geringen Dampfdruck hat und praktisch nicht in die Gasphase gelangt. Deshalb wurde bereits vorgeschlagen, als Absorptionsmittel eine ionische Flüssigkeit zu verwenden, da ionische Flüssigkeiten einen vernachlässigbar geringen Dampfdruck aufweisen.

WO 02/074718 beschreibt die Verwendung von ionischen Flüssigkeiten als Extraktivlösemittel für Extraktivdestillationen.

Die Verwendung von ionischen Flüssigkeiten als Absorptionsmittel für Kohlendioxid ist aus J.F. Brennecke und E.J. Maginn, AIChE Journal 47 (2001) 2384-2389 bekannt.

WO 2005/113702, WO 2006/084262 und WO 2006/134015 beschreiben die Verwendung von ionischen Flüssigkeiten als Absorptionsmittel in Absorptionskältemaschinen.

Die Erfinder der vorliegenden Erfindung haben nun festgestellt, dass die aus dem Stand der Technik bekannten Absorptionsverfahren, die eine ionische Flüssigkeit als Absorptionsmittel verwenden, nur einen unzureichenden und oft auch zeitlich schwankenden Stoffübergang ergeben, wenn die Absorption in einem Apparat erfolgt, in dem die Gasphase zur Absorption mit einem Film des Absorptionsmittels in Kontakt gebracht wird.

Gegenstand der Erfindung ist ein Verfahren zur Absorption eines flüchtigen Stoffes aus einer Gasphase in einem flüssigen Absorptionsmittel, bei dem die Gasphase mit einem Film des Absorptionsmittels in Kontakt gebracht wird und bei dem das Absorptionsmittel eine ionische Flüssigkeit und ein benetzungsförderndes Additiv umfasst.

Mit dem erfindungsgemäßen Verfahren wird gegenüber den aus dem Stand der Technik bekannten Verfahren ein rascherer und zeitlich stabilerer Stoffübergang in der Absorption erzielt und die Absorption kann in kleineren Apparaten störungsfrei durchgeführt werden.

Im erfindungsgemäßen Verfahren umfasst das Absorptionsmittel mindestens eine ionische Flüssigkeit und mindestens ein benetzungsförderndes Additiv. Vorzugsweise umfasst das Absorptionsmittel eine oder mehrere ionische Flüssigkeiten in einer Gesamtmenge von 20 bis 99,9 Gew.-% und ein oder mehrere benetzungsfördernde Additive in einer Gesamtmenge von 0,01 bis 10 Gew.-%.

Eine ionische Flüssigkeit im Sinne der Erfindung ist ein Salz oder eine Mischung von Salzen aus Anionen und Kationen, wobei das Salz bzw. die Mischung von Salzen einen Schmelzpunkt von weniger als 100°C aufweist.

Vorzugsweise besteht die ionische Flüssigkeit aus einem oder mehreren Salzen von organischen Kationen mit organischen oder anorganischen Anionen. Mischungen aus mehreren Salzen mit unterschiedlichen organischen Kationen und gleichem Anion sind besonders bevorzugt.

Als organische Kationen eignen sich insbesondere Kationen der allgemeinen Formeln (I) bis (V):

R¹R²R³R⁴N⁺ (I)

R¹R²N⁺=CR³R⁴ (II)

R¹R²R³R⁴P⁺ (III)

R¹R²P⁺=CR³R⁴ (IV)

R¹R²R³S⁺ (V)

in denen
R¹, R², R³, R⁴ gleich oder unterschiedlich sind und Wasserstoff, einen linearen oder verzweigten aliphatischen oder olefinischen Kohlenwasserstoffrest mit 1 bis 30 Kohlenstoffatomen, einen cycloaliphatischen oder cycloolefinischen Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen, einen durch eine oder mehrere Gruppen -O-, -NH-, -NR'-, -O-C(O)-, -(O)C-O-, -NH-C(O)-, -(O)C-NH-, -(CH₃)N-C(O)-, -(O)C-N(CH₃)-, -S(O₂)-O-, -O-S(O₂)-, -S(O₂)-NH-, -NH-S(O₂)-, -S(O₂)-N(CH₃)- oder -N(CH₃)-S(O₂)-, unterbrochenen linearen oder verzweigten aliphatischen oder olefinischen Kohlenwasserstoffrest mit 2 bis 30 Kohlenstoffatomen, einen endständig durch OH, OR', NH₂, N(H)R' oder N(R')₂ funktionalisierten linearen oder verzweigten aliphatischen oder olefinischen Kohlenwasserstoffrest mit 1 bis 30 Kohlenstoffatomen oder einen blockweise oder statistisch aufgebauten Polyetherrest der Formel -(R⁵-O)ₙ-R⁶ bedeuten,
R' ein aliphatischer oder olefinischer Kohlenwasserstoffrest mit 1 bis 30 Kohlenstoffatomen ist,
R⁵ ein 2 bis 4 Kohlenstoffatome enthaltender linearer oder verzweigter Kohlenwasserstoffrest ist,
n von 1 bis 200, vorzugsweise 2 bis 60, ist,
R⁶ Wasserstoff, ein linearer oder verzweigter aliphatischer oder olefinischer Kohlenwasserstoffrest mit 1 bis 30 Kohlenstoffatomen, ein cycloaliphatischer oder cycloolefinischer Kohlenwasserstoffrest mit 5 bis 40 Kohlenstoffatomen, ein aromatischer Kohlenwasserstoffrest mit 6 bis 40 Kohlenstoffatomen, ein Alkylarylrest mit 7 bis 40 Kohlenstoffatomen oder ein Rest -C(O)-R⁷ ist,
R⁷ ein linearer oder verzweigter aliphatischer oder olefinischer Kohlenwasserstoffrest mit 1 bis 30 Kohlenstoffatomen, ein cycloaliphatischer oder cycloolefinischer Kohlenwasserstoffrest mit 5 bis 40 Kohlenstoffatomen, ein aromatischer Kohlenwasserstoffrest mit 6 bis 40 Kohlenstoffatomen oder ein Alkylarylrest mit 7 bis 40 Kohlenstoffatomen ist,
wobei mindestens einer und vorzugsweise jeder der Reste R¹, R², R³ und R⁴ von Wasserstoff verschieden ist.

Ebenso geeignet sind Kationen der Formeln (I) bis (V), in denen die Reste R¹ und R³ zusammen einen 4- bis 10-gliedrigen, vorzugsweise 5- bis 6-gliedrigen, Ring bilden.

Ebenfalls geeignet sind heteroaromatische Kationen mit mindestens einem quaternären Stickstoffatom im Ring, das einen wie oben definierten Rest R¹ trägt, vorzugsweise am Stickstoffatom substituierte Derivate von Pyrrol, Pyrazol, Imidazol, Oxazol, Isoxazol, Thiazol, Isothiazol, Pyridin, Pyrimidin, Pyrazin, Indol, Chinolin, Isochinolin, Cinnolin, Chinoxalin oder Phthalazin.

Als anorganische Anionen eignen sich insbesondere Tetrafluoroborat, Hexafluorophosphat, Nitrat, Sulfat, Hydrogensulfat, Phosphat, Hydrogenphosphat, Dihydrogenphosphat, Hydroxid, Carbonat, Hydrogencarbonat und die Halogenide, vorzugsweise Chlorid.

Als organische Anionen eignen sich insbesondere R^{a}OSO₃⁻, R^{a}SO₃⁻, R^{a}OPO₃²⁻, (R^{a}O)₂PO₂⁻, R^{a}PO₃²⁻, R^{a}COO⁻, R^{a}O⁻, (R^{a}CO)₂N⁻, (R^{a}SO₂)₂N⁻ und NCN⁻ wobei R^{a} ein linearer oder verzweigter aliphatischer Kohlenwasserstoffrest mit 1 bis 30 Kohlenstoffatomen, ein cycloaliphatischer Kohlenwasserstoffrest mit 5 bis 40 Kohlenstoffatomen, ein aromatischer Kohlenwasserstoffrest mit 6 bis 40 Kohlenstoffatomen, ein Alkylarylrest mit 7 bis 40 Kohlenstoffatomen oder ein linearer oder verzweigter Perfluoralkylrest mit 1 bis 30 Kohlenstoffatomen ist.

In einer bevorzugten Ausführungsform umfasst die ionische Flüssigkeit ein oder mehrere 1,3-Dialkylimidazoliumsalze, wobei die Alkylgruppen besonders bevorzugt unabhängig voneinander ausgewählt sind aus Methyl, Ethyl, n-Propyl, n-Butyl und n-Hexyl. Besonders bevorzugte ionische Flüssigkeiten sind Salze von einem oder mehreren der Kationen 1,3-Dimethylimidazolium, 1-Ethyl-3-methylimidazolium, 1-(n-Butyl)-3-methylimidazolium, 1-(n-Butyl)-3-ethylimidazolium, 1-(n-Hexyl)-3-methylimidazolium, 1-(n-Hexyl)-3-ethyl-imidazolium und 1-(n-Hexyl)-3-butyl-imidazolium mit einem der Anionen Chlorid, Acetat, Methylsulfat, Ethylsulfat, Dimethylphosphat oder Methylsulfonat.

In einer weiteren bevorzugten Ausführungsform umfasst die ionische Flüssigkeit ein oder mehrere quaternäre Ammoniumsalze mit einem einwertigen Anion und Kationen der allgemeinen Formel (I) worin
R¹ ein Alkylrest mit 1 bis 20 Kohlenstoffatomen,
R² ein Alkylrest mit 1 bis 4 Kohlenstoffatomen,
R³ ein Rest (CH₂CHRO)ₙ-H mit n von 1 bis 200 und R = H oder CH₃ und
R⁴ ein Alkylrest mit 1 bis 4 Kohlenstoffatomen oder ein Rest (CH₂CHRO)ₙ-H mit n von 1 bis 200 und R = H oder CH₃ ist.

Besonders bevorzugt sind als Anion Chlorid, Acetat, Methylsulfat, Ethylsulfat, Dimethylphosphat oder Methylsulfonat.

Verfahren zur Herstellung der ionischen Flüssigkeiten sind dem Fachmann aus dem Stand der Technik bekannt.

Das benetzungsfördernde Addditiv umfasst vorzugsweise ein oder mehrere Tenside aus der Gruppe der nichtionischen Tenside, zwitterionischen Tenside und kationischen Tenside.

Geeignete nichtionische Tenside sind Alkylaminalkoxylate, Amidoamine, Alkanolamide, Alkylphosphinoxide, Alkyl-N-glucamide, Alkylglucoside, Gallensäuren, Alkylalkoxylate, Sorbitanester, Sorbitanesterethoxylate, Fettalkohole, Fettsäureethoxylate, Esterethoxylate und Polyethersiloxane.

Geeignete zwitterionischen Tenside sind Betaine, Alkylglycine, Sultaine, Amphopropionate, Amphoacetate, tertiäre Aminoxide und Silicobetaine.

Geeignete kationische Tenside sind quaternäre Ammoniumsalze mit einem oder zwei Substituenten mit 8 bis 20 Kohlenstoffatomen und einem Schmelzpunkt von mehr als 100°C, insbesondere entsprechende Tetraalkylammoniumsalze, Alkylpyridiniumsalze, Esterquats, Diamidoaminquats, Imidazoliniumquats, Alkoxyalkylquats, Benzylquats und Silikonquats.

In einer bevorzugten Ausführungsform umfasst das benetzungsfördernde Additiv ein oder mehrere nichtionische Tenside der allgemeinen Formel R(OCH₂CHR')ₘOH mit m von 4 bis 40, worin R ein Alkylrest mit 8 bis 20 Kohlenstoffatomen, ein Alkylarylrest mit 8 bis 20 Kohlenstoffatomen oder ein Polypropylenoxidrest mit 3 bis 40 Propylenoxideinheiten ist und R' Methyl oder vorzugsweise Wasserstoff ist.

In einer weiteren bevorzugten Ausführungsform umfasst das benetzungsfördernde Additiv ein Polyether-Polysiloxan-Copolymer das mehr als 10 Gew.-% [Si(CH₃)₂O]-Einheiten und mehr als 10 Gew.-% [CH₂CHR-O]-Einheiten enthält, in denen R Wasserstoff oder Methyl ist. Besonders bevorzugt sind Polyether-Polysiloxan-Copolymere der allgemeinen Formeln (VI) bis (VIII):

(CH₃)₃Si-O-[SiR¹(CH₃)-O]ₙ-Si(CH₃)₃ (VI)

R²O-Aₚ-[B-A]ₘ-A_{q}-R² (VII)

R²O-[A-2]ₚ-[B-Si(CH₃)₂-Z-O-A-Z]ₘ-B-Si(CH₃)₂[Z-O-A]_{q}O_{1-q}R² (VIII)

worin
A ein zweiwertiger Rest der Formel -[CH₂CHR³-O]ᵣ- ist,
B ein zweiwertiger Rest der Formel -[Si(CH₃)₂-O]ₛ- ist,
Z ein zweiwertiger linearer oder verzweigter Alkylenrest mit 2 bis 20 Kohlenstoffatomen und vorzugsweise -(CH₂)₃- ist,
n = 1 bis 30 ist,
m = 2 bis 100 ist,
p, q = 0 oder 1 ist,
r = 2 bis 100 ist,
s = 2 bis 100 ist,
von 1 bis 5 der Reste R¹ Reste der allgemeinen Formel -Z-O-A-R² sind und die restlichen Reste R¹ Methyl sind,
R² Wasserstoff oder ein aliphatischer oder olefinischer Alkylrest oder Acylrest mit 1 bis 20 Kohlenstoffatomen ist und
R³ Wasserstoff oder Methyl ist.

Die benetzungsfördernden Additive sind dem Fachmann bereits aus dem Stand der Technik als Additive für wässrige Lösungen bekannt und können nach aus dem Stand der Technik bekannten Verfahren hergestellt werden.

Vorzugsweise werden ionische Flüssigkeit und benetzungsförderndes Additiv so ausgewählt und in solchen Mengen gewählt, dass das Absorptionsmittel auf einer Oberfläche eines Stahls S235JRG2 gegen Luft einen Kontaktwinkel von weniger als 140° aufweist. Besonders bevorzugt weist das Absorptionsmittel einen Kontaktwinkel von weniger als 130° und insbesondere von weniger als 120° auf. Zur Bestimmung des Kontaktwinkels können kommerziell erhältliche Messgeräte eingesetzt werden. So kann der Kontaktwinkel beispielsweise mit dem Tropfenkonturanalyse-System DSA 100/DSA 100L oder dem Universal-Surface-Tester GH100, jeweils erhältlich von KRÜSS GmbH, bestimmt werden.

Das Absorptionsmittel weist vorzugsweise eine Viskosität bei 20°C von 1 bis 15000 mPa*s, besonders bevorzugt 2 bis 3000 mPa*s und insbesondere 5 bis 1000 mPa*s auf, jeweils bestimmt nach DIN 53019.

Bei dem erfindungsgemäßen Verfahren wird eine Gasphase, die einen flüchtigen Stoff enthält, mit einem Film des Absorptionsmittels in Kontakt gebracht. Die Gasphase kann dabei neben dem flüchtigen Stoff noch weitere Stoffe enthalten, die nicht absorbiert werden. Die Gasphase kann ebenso auch eine Dampfphase sein, die im Wesentlichen nur aus Dampf des flüchtigen Stoffes besteht.

Im erfindungsgemäßen Verfahren kann der Film des Absorptionsmittels auf jeder geeigneten Oberfläche erzeugt werden, beispielsweise auf Oberflächen aus Metall, Glas, Email oder Polymeren wie z.B. Polyethylen. Vorzugsweise wird die Absorption mit einem Film des Absorptionsmittels auf einer Metalloberfläche durchgeführt, da dann die bei der Absorption frei werdende Absorptionswärme besser abgeführt werden kann und der zur Absorption verwendete Apparat noch kleiner ausgeführt werden kann.

In einer bevorzugten Ausführungsform des Verfahrens wird der Film des Absorptionsmittels in einem Fallfilmapparat erzeugt. Für diese Ausführungsform geeignete Apparate sind dem Fachmann aus dem Bereich der Verdampfungstechnik als Fallfilmverdampfer bekannt.

In einer weiteren bevorzugten Ausführungsform des Verfahrens wird der Film des Absorptionsmittels auf einer strukturierten Packung erzeugt. Strukturierte Packungen sind dem Fachmann aus dem Gebiet der Absorptions- und Destillationstechnik bekannt. Die strukturierte Packung kann dabei aus jedem geeigneten Material, wie Metall, Keramik oder Kunststoff bestehen. Die Erzeugung des Films des Absorptionsmittels auf einer strukturierten Packung hat den Vorteil, dass die Absorption in Apparaten mit einem kleineren Volumen durchgeführt werden kann. Vorzugsweise werden strukturierte Packungen aus Metallblech oder Metallgewebe verwendet, mit denen der zur Absorption verwendete Apparat besonders klein und leicht ausgeführt werden kann. Alternativ zu strukturierten Packungen können aber auch regellose Füllkörperschüttungen verwendet werden.

Vorzugsweise wird bei dem erfindungsgemäßen Verfahren die bei der Absorption erhaltene Mischung aus flüchtigem Stoff und Absorptionsmittel in einer nachfolgenden Desorption bei einer gegenüber der Absorption erhöhten Temperatur und/oder einem gegenüber der Absorption verringerten Druck mit einer Gasphase in Kontakt gebracht, so dass mindestens ein Teil des flüchtigen Stoffes aus der Mischung desorbiert wird und das nach der Desorption des flüchtigen Stoffes verbleibende Absorptionsmittel wird in die Absorption zurückgeführt. Damit wird es möglich, das Absorptionsmittel mehrfach zur Absorption einzusetzen.

In der Ausführungsform mit einer Desorption des flüchtigen Stoffes wird das Verfahren vorzugsweise so geführt, dass die Desorption durch eine Membran erfolgt, die die Mischung aus flüchtigem Stoff und Absorptionsmittel von der Gasphase trennt, in die der flüchtige Stoff desorbiert wird. In dieser Ausführungsform können auch benetzungsfördernde Additive eingesetzt werden, die ein verstärktes Schäumen des Absorptionsmittels bewirken, ohne dass es während der Desorption zu einer Schaumentwicklung kommt.

In einer bevorzugten Ausführungsform des erfindungsgemäßen Verfahrens ist die Gasphase ein azeotropes Gemisch aus zwei oder mehr flüchtigen Stoffen mit ähnlichen Siedepunkten oder ein azeotropes Gemisch aus zwei oder mehr flüchtigen Stoffen, wobei mindestens einer der Stoffe bevorzugt absorbiert wird. Diese Ausführungsform ermöglicht es, in einem Destillationsverfahren durch eine Gaswäsche des dampfförmig erhaltenen Destillationsprodukts eine im Produkt enthaltene destillativ schwer abtrennbare Verunreinigung zu entfernen.

In einer alternativen Ausführungsform wird die Absorption in einer Rektifikationskolonne durchgeführt, wobei das Absorptionsmittel vorzugsweise nahe dem Kolonnenkopf zugeführt wird, so dass es in der Rektifikationskolonne wie ein Extraktivlösemittel wirkt.

In einer weiteren Ausführungsform ist die Gasphase ein Verbrennungsabgas und der flüchtige Stoff ist Kohlendioxid, so dass mit dem Verfahren Kohlendioxid aus einem Verbrennungsabgas abgetrennt wird.

In einer bevorzugten Ausführungsform des erfindungsgemäßen Verfahrens mit zusätzlicher Desorption erfolgt die Desorption bei einem gegenüber der Absorption erhöhten Druck, der desorbierte flüchtige Stoff wird bei dem zur Desorption verwendeten Druck kondensiert , das dabei erhaltene Kondensat wird anschließend bei einem Druck verdampft, der niedriger ist als der Druck der Desorption und mindestens so hoch ist wie der Druck in der Absorption, und die bei der Verdampfung des Kondensats erhaltene Gasphase wird mit dem Film des Absorptionsmittels in Kontakt gebracht. In dieser Ausführungsform ist der flüchtige Stoff vorzugsweise Wasser, Ammoniak oder Kohlendioxid. Vorzugsweise enthält die Gasphase im Wesentlichen nur den flüchtigen Stoff und keine weiteren Stoffe, die nicht im Absorptionsmittel absorbiert werden.

In dieser Ausführungsform eignet sich das erfindungsgemäße Verfahren zum Betrieb in einer Absorptionskältemaschine. Eine Absorptionskältemaschine zur Durchführung dieser Ausführungsform umfasst einen Absorber, einen Desorber, einen Verdampfer, einen Kondensator und ein Arbeitsmedium aus einem Absorptionsmittel und einem flüchtigen Stoff, wobei der Absorber eine Vorrichtung zum in Kontakt bringen einer den flüchtigen Stoff enthaltenden Gasphase mit einem Film aus Absorptionsmittel umfasst und das Absorptionsmittel eine ionische Flüssigkeit und ein benetzungsförderndes Additiv umfasst. Die erfindungsgemäßen Absorptionskältemaschinen können kompakter gebaut werden und ermöglichen einen höheren Wirkungsgrad als die aus dem Stand der Technik bekannten Absorptionskältemaschinen. Außerdem sind sie robuster im Betrieb und unempfindlich gegenüber Erschütterungen und Vibrationen und eignen sich deshalb besser für einen mobilen Einsatz, z.B. in Kraftfahrzeugen und auf Schiffen.

Vorzugsweise wird in einer Absorptionskältemaschine ein Arbeitsmedium verwendet, das eine Mischung aus einem Absorptionsmittel und einem flüchtigen Stoff ist, wobei das Absorptionsmittel eine ionische Flüssigkeit und ein benetzungsförderndes Additiv umfasst und der flüchtige Stoff Wasser, Ammoniak oder Kohlendioxid ist.

### Beispiele

Mehrere zur Verwendung in einer Absorptionskältemaschine geeignete Arbeitsmedien gemäß der vorliegenden Erfindung wurden hergestellt und untersucht. Die Zusammensetzung sowie die Eigenschaften der Arbeitsmedien sind in Tabellen 1 und 2 dargelegt. Die ionischen Flüssigkeiten EMIM Chlorid (1-Ethyl-3-methylimidazoliumchlorid), EMIM Acetat (1-Ethyl-3-methylimidazoliumacetat), MMIM DMP (1-Methyl-3-methyl-imidazoliumdimethylphosphat) und TEGO® IL 2MS (Bis(hydroxyethyl)dimethylammoniummethansulfonat) sind unter diesen Namen kommerziell bei der Firma Evonik Goldschmidt GmbH erhältlich. Der Korrosionsinhibitor REWOCOROS® AC 101 und das benetzungsfördernde Additiv TEGOPREN® 5840 (ein polyethermodifiziertes Polysiloxan) sind bei der Firma Evonik Goldschmidt GmbH kommerziell erhältlich. Die Arbeitsmedien aus Tabellen 1 und 2 wurden durch Mischen der jeweiligen ionischen Flüssigkeit, des Kältemittels Wasser, des Korrosionsinhibitors REWOCOROS® AC 101 und des benetzungsfördernden Additivs TEGOPREN® 5840 in den in Tabellen 1 und 2 angegebenen Mengenanteilen bei 25°C hergestellt. Der Kontaktwinkel auf einer S235JRG2-Stahloberfläche wurde bei 25 °C mit einem Tropfenkonturanalyse-System DSA 100/DSA 100L bestimmt.

**Tabelle 1**

| Beispiel | 1* | 2 | 3* | 4 |
|---|---|---|---|---|
| Ionische Flüssigkeit | EMIM Acetat | EMIM Acetat | EMIM Chlorid | EMIM Chlorid |
| Ionische Flüssigkeit in Gew.-% | 90 | 90 | 90 | 90 |
| Wasser in Gew.-% | 10,0 | 9,4 | 10,0 | 9,4 |
| REWOCOROS® AC 101 in Gew.-% | 0 | 0,5 | 0 | 0,5 |
| TEGOPREN® 5840 in Gew.-% | 0 | 0,1 | 0 | 0,1 |
| Kontaktwinkel | 111 | 105 | 117 | |
| Wasserpartialdruck bei 35°C in mbar | 4,4 | 4,5 | 3,9 | 4,0 |

| | | | | |
|---|---|---|---|---|
| *nicht erfindungsgemäß | | | | |

**Tabelle 2**

| Beispiel | 5* | 6 | 7* | 8 |
|---|---|---|---|---|
| Ionische Flüssigkeit | MMIM DMP | MMIM DMP | TEGO® IL 2MS | TEGO® IL 2MS |
| Ionische Flüssigkeit in Gew.-% | 90 | 90 | 90 | 90 |
| Wasser in Gew.-% | 10,0 | 9,4 | 10,0 | 9,4 |
| REWOCOROS® AC 101 in Gew.-% | 0 | 0,5 | 0 | 0,5 |
| TEGOPREN® 5840 in Gew.-% | 0 | 0,1 | 0 | 0,1 |
| Kontaktwinkel | 96 | | 108 | 104 |
| Wasserpartialdruck bei 35°C in mbar | 5,1 | 5,3 | 15,2 | 15,4 |

| | | | | |
|---|---|---|---|---|
| *nicht erfindungsgemäß | | | | |

## Patentansprüche

1. Verfahren zur Absorption eines flüchtigen Stoffes aus einer Gasphase in einem flüssigen Absorptionsmittel, wobei die Gasphase mit einem Film des Absorptionsmittels in Kontakt gebracht wird,
**dadurch gekennzeichnet,**
**dass** das Absorptionsmittel eine ionische Flüssigkeit und ein benetzungsförderndes Additiv umfasst.

2. Verfahren nach Anspruch 1,
**dadurch gekennzeichnet,**
**dass** die bei der Absorption erhaltene Mischung aus flüchtigem Stoff und Absorptionsmittel in einer nachfolgenden Desorption bei einer gegenüber der Absorption erhöhten Temperatur und/oder einem gegenüber der Absorption verringerten Druck mit einer Gasphase in Kontakt gebracht wird, so dass mindestens ein Teil des flüchtigen Stoffes aus der Mischung desorbiert wird und
das nach der Desorption des flüchtigen Stoffes verbleibende Absorptionsmittel in die Absorption zurückgeführt wird.

3. Verfahren nach Anspruch 2,
**dadurch gekennzeichnet,**
**dass** die Desorption durch eine Membran erfolgt, die die Mischung aus flüchtigem Stoff und Absorptionsmittel von der Gasphase trennt, in die der flüchtige Stoff desorbiert wird.

4. Verfahren nach einem der vorangehenden Ansprüche,
**dadurch gekennzeichnet,**
**dass** das Absorptionsmittel eine oder mehrere ionische Flüssigkeiten in einer Gesamtmenge von 20 bis 99,9 Gew.-% und ein oder mehrere benetzungsfördernde Additive in einer Gesamtmenge von 0,01 bis 10 Gew.-% umfasst.

5. Verfahren nach einem der vorangehenden Ansprüche,
**dadurch gekennzeichnet,**
**dass** das Absorptionsmittels auf einer Oberfläche eines Stahls S235JRG2 gegen Luft einen Kontaktwinkel von weniger als 140° aufweist.

6. Verfahren nach einem der vorangehenden Ansprüche,
**dadurch gekennzeichnet,**
**dass** die ionische Flüssigkeit aus Salzen von organischen Kationen mit organischen oder anorganischen Anionen besteht.

7. Verfahren nach einem der vorangehenden Ansprüche,
**dadurch gekennzeichnet,**
**dass** die ionische Flüssigkeit ein oder mehrere 1,3-Dialkylimidazoliumsalze umfasst.

8. Verfahren nach einem der Ansprüche 1 bis 6,
**dadurch gekennzeichnet,**
**dass** die ionische Flüssigkeit ein oder mehrere quaternäre Ammoniumsalze der allgemeinen Formel R¹R²R³R⁴N⁺A⁻ umfasst, worin
R¹ ein Alkylrest mit 1 bis 20 Kohlenstoffatomen,
R² ein Alkylrest mit 1 bis 4 Kohlenstoffatomen,
R³ ein Rest (CH₂CHRO)ₙ-H mit n von 1 bis 200 und R = H oder CH₃,
R⁴ ein Alkylrest mit 1 bis 4 Kohlenstoffatomen oder ein Rest (CH₂CHRO)ₙ-H mit n von 1 bis 200 und R = H oder CH₃ und
A⁻ ein einwertiges Anion ist.

9. Verfahren nach einem der vorangehenden Ansprüche,
**dadurch gekennzeichnet,**
**dass** das benetzungsfördernde Additiv ein oder mehrere Tenside aus der Gruppe der nichtionischen Tenside, zwitterionischen Tenside und kationischen Tenside umfasst.

10. Verfahren nach Anspruch 9,
**dadurch gekennzeichnet,**
**dass** das benetzungsfördernde Additiv ein oder mehrere nichtionische Tenside der allgemeinen Formel R(OCH₂CH₂)ₘOH mit m von 4 bis 40 umfasst, worin
R ein Alkylrest mit 8 bis 20 Kohlenstoffatomen, ein Alkylarylrest mit 8 bis 20 Kohlenstoffatomen oder ein Polypropylenoxidrest mit 3 bis 40 Propylenoxideinheiten ist.

11. Verfahren nach einem der vorangehenden Ansprüche,
**dadurch gekennzeichnet,**
**dass** das benetzungsfördernde Additiv ein Polyether-Polysiloxan-Copolymer umfasst, das mehr als 10 Gew.-% [Si(CH₃)₂O]-Einheiten und mehr als 10 Gew.-% [CH₂CHR-O]-Einheiten enthält, in denen R Wasserstoff oder Methyl ist.

12. Verfahren nach einem der vorangehenden Ansprüche,
**dadurch gekennzeichnet,**
**dass** die Absorption mit einem Film des Absorptionsmittels auf einer Metalloberfläche durchgeführt wird.

13. Verfahren nach einem der vorangehenden Ansprüche,
**dadurch gekennzeichnet,**
**dass** der Film des Absorptionsmittels in einem Fallfilmapparat erzeugt wird.

14. Verfahren nach einem der Ansprüche 1 bis 12,
**dadurch gekennzeichnet,**
**dass** der Film des Absorptionsmittels auf einer strukturierten Packung, vorzugsweise einer strukturierten Packung aus Metallblech oder Metallgewebe, erzeugt wird.

15. Verfahren nach einem der vorangehenden Ansprüche,
**dadurch gekennzeichnet,**
**dass** die Gasphase ein azeotropes Gemisch aus zwei oder mehr flüchtigen Stoffen ist und mindestens einer der Stoffe bevorzugt absorbiert wird.

16. Verfahren nach einem der Ansprüche 1 bis 14,
**dadurch gekennzeichnet,**
**dass** die Absorption in einer Rektifikationskolonne durchgeführt wird.

17. Verfahren nach einem der Ansprüche 1 bis 14,
**dadurch gekennzeichnet,**
**dass** die Gasphase ein Verbrennungsabgas und der flüchtige Stoff Kohlendioxid ist.

18. Verfahren nach einem der Ansprüche 2 bis 14,
**dadurch gekennzeichnet,**
**dass** die Desorption bei einem gegenüber der Absorption erhöhten Druck erfolgt, der desorbierte flüchtige Stoff bei dem zur Desorption verwendeten Druck kondensiert wird, das dabei erhaltene Kondensat anschließend bei einem Druck verdampft wird, der niedriger ist als der Druck der Desorption und mindestens so hoch ist wie der Druck in der Absorption, und die bei der Verdampfung des Kondensats erhaltene Gasphase mit dem Film des Absorptionsmittels in Kontakt gebracht wird.

19. Verfahren nach Anspruch 18,
**dadurch gekennzeichnet,**
**dass** der flüchtige Stoff Wasser, Ammoniak oder Kohlendioxid ist.

20. Absorptionskältemaschine zur Ausführung eines Verfahrens nach Anspruch 17 oder 18, umfassend einen Absorber, einen Desorber, einen Verdampfer, einen Kondensator und ein Arbeitsmedium aus einem Absorptionsmittel und einem flüchtigen Stoff, wobei der Absorber eine Vorrichtung zum in Kontakt bringen einer den flüchtigen Stoff enthaltenden Gasphase mit einem Film aus Absorptionsmittel umfasst
**dadurch gekennzeichnet,**
**dass** das Absorptionsmittel eine ionische Flüssigkeit und ein benetzungsförderndes Additiv umfasst.

21. Verwendung einer Mischung aus
a) einem Absorptionsmittel, umfassend eine ionische Flüssigkeit und ein benetzungsförderndes Additiv, und
b) einem flüchtigen Stoff ausgewählt aus Wasser, Ammoniak und Kohlendioxid
als Arbeitsmedium in einer Absorptionskältemaschine.
